Europäisches Patentamt

European Patent Office

Office européen des brevets

(19)

(11)  EP 0 491 635 B1

(12)  **FASCICULE DE BREVET EUROPEEN**

(45) Date de publication et mention
de la délivrance du brevet:
**10.07.1996  Bulletin 1996/28**

(51) Int Cl.⁶: **G21C 3/62**, C04B 35/51,
C01G 43/01, C01G 43/025

(21) Numéro de dépôt: **91420457.3**

(22) Date de dépôt: **17.12.1991**

(54) **Procédé de fabrication de pastilles combustibles nucléaires frittées à partir de solutions précipitées à l'aide de peroxyde d'hydrogène en milieu acide**

Verfahren zur Herstellung von gesinterten Kernbrennstofftabletten aus gefällten Lösungen mit Hilfe von Wasserstoffperoxyden in saurem Milieu

Process for the manufacturing of sintered pellets of nuclear fuel, via solutions precipitated with hydrogen peroxide in an acidic medium

(84) Etats contractants désignés:
**BE DE ES FR GB SE**

(30) Priorité: **19.12.1990  FR 9016381**

(43) Date de publication de la demande:
**24.06.1992  Bulletin 1992/26**

(73) Titulaires:
• **COMPAGNIE GENERALE DES MATIERES NUCLEAIRES**
  **F-78141 Velizy-Villacoublay Cédex (FR)**
• **SOCIETE FRANCO BELGE DE FABRICATION DE COMBUSTIBLES**
  **F-92084 Paris La Défense (FR)**

(72) Inventeurs:
• **Bastide, Bernard**
  **F-38500 La Buisse (FR)**

• **Floreancig, Antoine**
  **F-38140 La Murette (FR)**

(74) Mandataire: **Dubois-Chabert, Guy**
  **c/o BREVATOME**
  **25, rue de Ponthieu**
  **75008 Paris (FR)**

(56) Documents cités:
EP-A- 0 054 014          EP-A- 0 351 334
DE-A- 3 126 854          FR-A- 2 352 750
GB-A- 2 100 712          US-A- 4 615 834

• REACTOR FUEL PROCESSING vol. 5, no. 3, 1 Juillet 1962, pages 61 - 71; 'PRODUCTION OF URANIUM, THORIUM, PLUTONIUM AND THEIR COMPOUNDS'

**Description**

**DOMAINE TECHNIQUE**

L'invention concerne un procédé par étape d'obtention de pastilles combustibles nucléaires d'oxydes frittés de très bonne qualité (en particulier de très forte densité), du type MxOy, à partir de solutions contenant l'élément M qui est précipité à l'aide de peroxyde d'hydrogène en milieu acide.

Dans tout ce qui est exposé M représente tous éléments ou mélanges d'éléments utilisés habituellement dans la confection des pastilles combustibles nucléaires et particulièrement tous les éléments fissile ou fertiles, tels que U, Pu, Th, ou neutrophages, tels que Hf.

**ETAT DE LA TECHNIQUE**

Les pastilles combustibles d'oxydes frittés MxOy sont généralement obtenues en partant de solutions aqueuses de sels solubles, par exemple nitrates, sulfates, d'un ou plusieurs éléments M, et en effectuant un procédé par étapes.

Au cours de ce procédé, il est nécessaire de mettre le ou les éléments M sous forme solide pour obtenir "in fine" les oxydes frittés recherchés, par exemple les oxydes à base d'$UO_2$ ou d'un mélange $UO_2$, $Pu O_2$.

La mise sous forme solide peut être obtenue par précipitation des éléments M à partir de la solution aqueuse. Cette précipitation peut être effectuée par une base (par exemple soude, ammoniaque) mais elle conduit à un effluent liquide gênant qui est un sel alcalin dont le rejet pose des problèmes.

C'est pourquoi il est connu et préférable d'opérer la précipitation à l'aide de peroxyde d'hydrogène pour obtenir comme sous produit un acide qui est recyclable, les éléments M se trouvant précipités sous la forme de peroxydes.

Cependant, dans ce cas, la morphologie des particules obtenues est telle qu'au cours des étapes suivantes du procédé (séchage, calcination, réduction),les poudres intermédiaires d'oxydes obtenues sont souvent insuffisament fluides, des traitements de broyage et/ou de conditionnement particuliers (tamisage, granulation, adjuvants) étant alors nécessaires, et conduisent à des pastilles dont la densité frittée est insuffisante. C'est pourquoi, il a été proposé d'opérer cette précipitation en milieu partiellement neutralisé, le pH étant alors maintenu entre 1 et 3,5 par addition d'une base, et dans des réacteurs de conception particulière (voir par exemple US 4 152 395, US 4 271 127, FR 2 634 048). Les pastilles frittées ainsi obtenues sont satisfaisantes mais l'acide n'est pas recyclable et se trouve de nouveau en partie sous forme d'effluent de sel alcalin difficilement rejetable.

Face à ces inconvénients, la demanderesse a recherché à précipiter les éléments M sous forme de peroxyde en milieu acide (non partiellement neutralisé) de façon à obtenir des poudres intermédiaires filtrables, conduisant après pressage et frittage sans traitement de conditionnement particulier, à des pastilles d'oxydes frittés de caractéristiques améliorées, ayant en particulier une densité suffisante pour une utilisation optimale en réacteur nucléaire. Ainsi, la densité frittée est en général supérieure à 96% de la densité théorique, c'est notamment le cas pour les pastilles à base d'UO2.

Elle a aussi recherché un procédé dans lequel la tolalité de l'acide sous-produit lors de la précipitation est recyclé.

**DESCRIPTION DE L'INVENTION**

L'invention est un procédé d'obtention de pastilles d'oxydes frittés MxOy, M représentant un ou plusieurs des métaux ou éléments utilisés dans la constitution de pastilles combustibles nucléaires, comportant successivement :

a) le traitement d'une solution initiale de sels solubles du ou des éléments M à l'aide d'une solution de peroxyde d'hydrogène, la solution et le peroxyde étant appelés les réactifs,

b) l'obtention d'un précipité de peroxydes en suspension dans des eaux-mères,

c) une séparation dudit précipité d'avec les eaux-mères,

d) un séchage, une calcination, puis éventuellement une réduction dudit précipité conduisant à des poudres intermédiaires d'oxydes,

e) un pressage et un frittage de ladite poudre.

lequel procédé permet d'obtenir directement des pastilles d'oxydes frittés de très forte densité en général supérieure à 96 % de la densité théorique et de qualité améliorée, tout en évitant des traitements particuliers de conditionnement desdites poudres intermédiaires d'oxydes, et est caractérisé en ce que dans ledit traitement (a) de précipitation on effectue une dispersion instantanée d'un réactif dans l'autre en phase liquide continue confinée dans une enceinte de dimension la plus restreinte possible, pour obtenir un mélange homogène et une précipitation de germes également instantanés, en évitant le grossissement desdits germes par épuisement rapide des eaux-mères.

Il est important de limiter le temps de contact entre le précipité obtenu et le ou les réactifs n'ayant pas encore réagi. Ainsi, en opérant par apport continu et simultané de l'ensemble des réactifs, la suspension obtenue est évacuée rapidement de la zone de réaction pour que les particules formées ne viennent pas en contact avec l'apport neuf de réactifs et notamment de la solution saline de sels solubles.

Pour que le mélange des réactifs soit homogène à l'échelle microscopique, la réaction de précipitation se fait en général en phase liquide continue dans un volume le plus restreint possible et confiné.

Les sels solubles peuvent être des nitrates , sulfates, chlorures, carbonates et les solutions contiennent un ou plusieurs éléments M. On préfère utiliser les nitrates et sulfates et plus spécialement les nitrates.

Le procédé s'applique particulièrement bien aux solutions à base d'uranium, de provenance et de teneur en $U_{235}$ quelconques, seul ou en mélange avec d'autres éléments, par exemple Pu, Th, Hf. Ces solutions sont en général acides.

Il est préférable d'opérer avec au moins un des réactifs en solution concentrée c'est-à-dire que la concentration de l'élément M dans la solution de départ, en particulier U, est supérieure généralement à 150 g/l ou mieux à 300 g/ l ; la teneur en $H_2O_2$ de la solution de peroxyde d'hydrogène peut alors être de seulement 30 % (poids).

Mais on peut aussi utliser une solution de peroxyde d'hydrogène titrant jusqu'à 70 % ou plus de $H_2O_2$.

Il est très important que la quantité de peroxyde d'hydrogène soit en excès modéré par rapport à la stoechiométrie des réactions de précipitation, qui s'écrivent: selon l'équation suivante ( dans le cas de la précipitation du nitrate d'uranyle à une température inférieure à 65°C) :

$$UO_2 (NO_3)_2 + 4H_2O + H_2O_2 \rightarrow UO_4, 4H_2O + 2HNO_3 \;;$$

à une température supérieure à 65° C , on obtiendrait $UO_4, 2H_2O$.

Cet excès est en général inférieur à 5 fois la stoechiométrie et de préférence inférieur à 2 fois ladite stoechiométrie et contribue à l'épuisement rapide de la solution de départ.

En général, la solution saline de départ est acide et le pH obtenu dans la suspension résultante est, compris entre 0 et 0,5.

Après obtention du précipité de peroxydes en suspension dans les eaux-mères, celui-ci est filtré, au besoin en présence d'un floculant, par exemple anionique. Il est ensuite séché puis calciné pour transformer le peroxyde en oxyde. Ce dernier est ensuite réduit, par exemple en présente d'hydrogène à haute température, pour l'amener si nécessaire au degré d'oxydation désiré pour son ulilisation comme pastille combustible. Dans le cas de l'uranium, la calcination conduit au stade $UO_3$ ou $U_3O_8$ selon la température finale de ladite calcination, ces oxydes étant ensuite réduits à environ 600°-700°C sous atmosphère d'azote et d'hydrogène pour obtenir $UO_2$.

L'oxyde, éventuellement réduit, est ensuite mis en forme par pressage et fritté selon les techniques propres à l'homme de métier.

L'invention permet ainsi d'obtenir au cours du procédé des précipités solides intermédiaires qui se filtrent bien, voire très bien, même si l'utilisation d'agents floculants habituels est parfois intéressante.

Ces précipités, une fois séchés ou calcinés, donnent des poudres facilement coulables et manipulables sans traitement particulier de conditionnement (tels que broyage, tamisage, granulation). Ces dernières conduisent à des pastilles crues d'oxydes d'une bonne solidité, améliorée par rapport à celle des pastilles de l'art antérieur obtenues en milieu acide ; les pastilles frittées résultantes sont également de qualité améliorée, leur densité dépassant en général 96 % de la densité théorique.

Le précipité de peroxydes obtenu selon l'invention a une très faible dispersion granulométrique et se présente sous la forme d'agglomérats de dimension unitaire généralement comprise entre 10 et 15 $\mu$m ; ils sont composés de fines particules élémentaires de forme ramassée, plus ou moins assimilable à une forme sphéroïdale, ayant par exemple un rapport longueur/diamètre ne dépassant pas 1 à 2. .

En comparaison, les précipitations effectuées par le peroxyde d'hydrogène en milieu acide (non partiellement neutralisé) selon l'art antérieur conduisent à des poudres constituées d'enchevêtrements complexes et difficiles à détruire, d'aiguilles allongées ayant généralement un rapport longueur/diamètre supérieur à 10. Ces poudres sont difficiles à fritter avec de bons résultats et dans le cas de l'uranium, on n'obtient pas habituellement de densités pastilles frittées supérieures à 93 % de la densité théorique ; même en utilisant une pression de compactage très élevée, on a obtenu une densité qui est insuffisante pour un bon emploi comme combustible nucléaire.

Le procédé de l'invention est de plus économique car il permet d'utiliser des solutions de départ concentrées et l'acide produit lors de la précipitation peut être intégralement recyclé, après éventuelle concentration, sans rejet d'effluent gênant.

Tous types de réacteurs provoquant un mélange instantané homogène desdits réactifs dans un espace confiné le plus restreint possible, sans qu'il y ait discontinuité des phases liquides, et permettant de limiter le temps de contact des produits formés avec les réactifs neufs, conviennent bien, en particulier les réacteurs à jet.

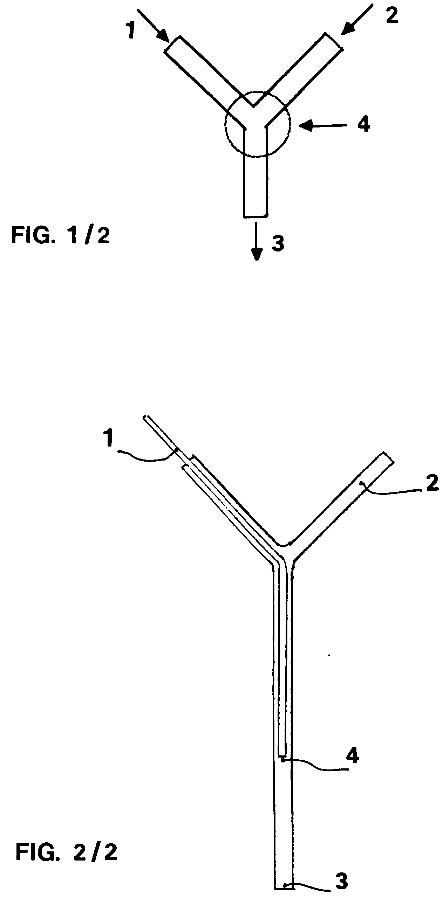

Les figures 1 et 2 illustrent des modes particuliers de réalisation de la précipitation selon l'invention. Dans ces figures :

(1) représente le tube d'arrivée d'un des réactifs, par exemple la solution du peroxyde d'hydrogène.

(2) représente le tube d'arrivée de l'autre réactif, par exemple la solution aqueuse d'un sel soluble de M.

(3) représente le tube de sortie de la suspension de peroxyde de M dans les eaux-mères constituées d'une solution de l'acide sous-produit et de l'excès de peroxyde d'hydrogène.

(4) représente le volume réduit où arrivent les réactifs et où se produit la dispersion instantanée d'un réactif dans l'autre, et la réaction de précipitation. On voit que, selon l'invention, la solution de sel soluble est épuisée rapidement, que le précipité formé est aussitôt évacué en dehors de la zone de réaction à l'aide des eaux-mères rapidement épuisées, et qu'il n'y a pas dans le dit volume réduit la présence de germes préexistants quand les réactifs neufs y parviennent.

## EXEMPLE 1

Cet exemple illustre la difficulté d'obtenir des pastilles combustibles de propriétés satisfaisantes en utilisant une précipitation par le peroxyde d'hydrogène en milieu acide selon l'art antérieur.

Pour cela, on a précipité l'uranium d'une solution de nitrate d'uranyle contenant 350 gU/l à l'aide d'eau oxygénée à 30 % (poids), les deux réactifs étant introduits simultanément dans un réacteur conventionel agité de 3 l.

Le précipité obtenu a été filtré, lavé, calciné à 650° C puis réduit à 600° C en présence d'hydrogène. La poudre d'UO2 obtenue a une surface spécifique BET de 1,27 m2/g et un rapport

$$\frac{O}{U} = 2,02.$$

Le compactage sous forme de pastilles a été effectué à différentes pressions, les pressions les plus élevées étant en limite d'utilisation des outillages.

Les pastilles crues obtenues ont ensuite été frittées à 1750°C sous atmosphère N2 + H2.

On a alors mesuré la densité frittée des pastilles en % de la densité théorique (dth), et leur stabilité thermique évaluée par l'écart de densité obtenu après un cycle de refrittage à 1700°c, écart qui ne doit pas excéder 1 %.

Les résultats sont les suivants :

| Pression | (MPa) | 290 | 360 | 450 | 660 |
| | (bar) | 2900 | 3600 | 4500 | 6600 |
|---|---|---|---|---|---|
| densité crue | | 5,6 | 5,8 | 6,0 | 6,4 |
| densité frittée (%dth) | | 92,6 | 93,4 | 94,2 | 95,0 |
| stabilité thermique (écart de dth en %) | | 1,27 | 1,15 | 1,15 | 1,01 |

On voit que pour des pressions de compactage normales et des densités crues normales, les densités frittées obtenues sont nettement insuffisantes ; il faut utiliser des pressions anormalement: élevées pour augmenter lesdites densités frittées qui toutefois n'atteignent pas une valeur suffisante.

Par ailleurs, la stabilité thermique est insuffisante.

## EXEMPLE 2

Cet exemple illustre l'invention.

On a utilisé une solution de nitrate d'uranyle contenant 370 gU/l et 0,5 N d'acidité libre, on a précipité l'uranium à l'aide d'une solution de peroxyde d'hydrogène contenant 21 % (poids) de $H_2O_2$ dans un réacteur du type de celui de la figure 2.

Le tube (1) d'alimentation en peroxyde d'hydrogène a un diamètre de 1 mm, le tube (2) d'alimentation en solution de nitrate d'uranyle a un diamètre de 4 mm au niveau de la zone de réaction (4). La longueur du tube située entre la zone (4) et l'extrémité (3) est de 150 mm.

On a alimenté la solution de nitrate à raison de 400 cm3/h et celle de peroxyde d'hydrogène à raison de 200 cm3/h.

On a opéré à 35° C et recueilli dans un récipient une suspension de $UO_4$, $4H_2O$ à raison de 200 g/h environ.

La suspension a été ensuite filtrée après l'avoir légèrement diluée et additionnée de 1%o d'un floculant AN 945 BPM de la Société FLOERGER.

Le précipité a été séché à 50° C, puis calciné 4 h à 650° C pour obtenir un oxyde qui a été réduit à 700° C sous hydrogène.

Il en est résulté une poudre de surface spécifique 2,1 m2/g ayant une rapport

$$\frac{O}{U} = 2,02 \; ;$$

Des pastilles crues ont été obtenues par compression sous 390 MPa pour obtenir une densité crue de 5,9.

Après frittage à 1750° C sous atmosphère $N_2 + H_2$, la densité frittée obtenue est de 96,6 % de la densité théorique, ce qui représente un résultat excellent, compte tenu par exemple des conditions d'obtention des pastilles crues peu contraignantes.

De plus, la stabilité thermique est de 0,56 %, ce qui est une valeur normale pour les oxydes $UO_2$ entrant habituellement dans la fabrication des combustibles nucléaires.

## Revendications

1. Procédé d'obtention de pastilles d'oxydes frittés $M_xO_y$, M représentant un ou plusieurs des métaux ou éléments utilisés dans la constitution de pastilles combustibles nucléaires, comportant successivement :

   a) le traitement d'une solution initiale de sels solubles du ou des éléments M à l'aide d'une solution de peroxyde d'hydrogène, la solution et le peroxyde étant appelés les réactifs.

   b) l'obtention d'un précipité de peroxydes en suspension dans des eaux-mères,

   c) une séparation dudit précipité d'avec les eaux-mères,

   d) un séchage, une calcination, puis éventuellement une réduction dudit précipité conduisant à des poudres intermédiaires d'oxydes,

   e) un pressage et un frittage de la dite poudre.

   lequel procédé permet d'obtenir directement des pastilles d'oxydes frittés de très forte densité en général supérieure à 96 % de la densité théorique et de qualité améliorée, tout en évitant des traitements particuliers de conditionnement desdites poudres intermédiaires d'oxydes, et est caractérisé en ce que dans ledit traitement (a) de précipitation on effectue une dispersion instantanée d'un réactif dans l'autre en phase liquide continue confinée dans une enceinte de dimension la plus restreinte possible, pour obtenir un mélange homogène et une précipitation de germes également instantanés, en évitant le grossissement desdits germes par épuisement rapide des eaux-mères.

2. Procédé selon la revendication 1, caractérisé en ce que M représente l'un au moins des métaux ou éléments utilisés dans les combustibles nucléaires, choisis parmi les éléments fissiles ou fertiles U, Pu, Th, et parmi les éléments neutrophages Hf.

3. Procédé selon la revendication 2, caractérisé en ce que M représente l'uranium ou les mélanges à base d'uranium.

4. Procédé selon l'une quelconque des revendications 1 à 3, caractérisé en ce que les sels solubles sont des nitrates ou sulfates.

**5.** Procédé selon l'une quelconque des revendications 1 à 4, caractérisé en ce que la concentration de la solution initiale de sels solubles en éléments est supérieure à 150 g/l ou de préférence à 300 g/l.

**6.** Procédé selon l'une quelconque des revendications 1 à 5, caractérisé en ce que la quantité de peroxyde d'hydrogène est ajoutée en excès et que cet excès est inférieur à 5 fois, et de préférence 2 fois, la stoechiométrie des réactions de précipitation.

**7.** Procédé selon l'une quelconque des revendications 1 à 6, caractérisé en ce que le temps de contact entre le précipité de peroxydes formé et les réactifs n'ayant pas encore réagi est limité.

**8.** Procédé selon l'une quelconque des revendications 1 à 7, caractérisé en ce que la précipitation est effectuée dans un réacteur à jet.

**9.** Précipité de peroxydes obtenu selon le procédé de l'une quelconque des revendications 1 à 8, caractérisé en ce qu'il est constitué d'agglomérats de particules élementaires de forme plus ou moins sphéroïdale dont le rapport longueur sur diamètre ne dépasse pas 2.

**10.** Précipité selon la revendication 9, caractérisé en ce que les agglomérats ont une dimension comprise entre 10 et 15 μm.

**Patentansprüche**

**1.** Verfahren zur Herstellung von gesinterten Oxidtabletten MxOy, worin M für ein oder mehrere Metalle oder Elemente steht, die bei der Herstelung von Kernbrennstofftabletten verwandt werden, welches nacheinander einschließt:

a) die Behandlung einer Anfangslösung von löslichen Salzen des oder der Elemente M mit Hilfe einer Wasserstoffperoxidlösung, wobei die Lösung und das Peroxid als Reaktanden bezeichnet werden,

b) den Erhalt eines Peroxidniederschlages in Suspension in der Mutterlauge,

c) die Trennung des Niederschlags von der Mutterlauge,

d) die Trocknung, Kalzinierung und danach gegebenenfalls die Reduktion des Niederschlags, was zu intermediären Oxidpulvern führt,

e) das Formen und Sintern des Pulvers,

wobei das Verfahren es erlaubt, direkt Sinteroxidtabletten einer sehr hohen Dichte von im allgemeinen mehr als 96 % der theoretischen Dichte und von verbesserter Qualität herzustellen, jeweils unter Vermeidung von Sonderbehandlungen und Konditionierung der intermediären Oxidpulver, dadurch gekennzeichnet, daß in der Behandlung (a) zur Ausfällung man eine augenblickliche Dispersion des einen Reaktanden im anderen in flüssiger Phase unter fortgesetztem Einschluß in einem abgeschlossenen Bereich kleinstmöglicher Dimension bewirkt, um ebenfalls augenblicklich eine homogene Mischung und eine Ausfällung von Keimen zu erhalten, wobei das Wachstum dieser Keime durch schnelles Abführen der Mutterlauge vermieden wird.

**2.** Verfahren nach Anspruch 1, dadurch gekennzeichnet, daß M wenigstens eines der Metalle oder Elemente darstellt, die bei Kernbrennstoffen verwandt werden, ausgewählt aus den spaltbaren oder brühbaren Elementen U, Pu, Th und unter den neutronenfangenden Elementen Hf.

**3.** Verfahren nach Anspruch 2, dadurch gekennzeichnet, daß M für Uran oder Mischungen auf Basis von Uran steht.

**4.** Verfahren nach einem der Ansprüche 1 bis 3, dadurch gekennzeichnet, daß die löslichen Salze Nitrate oder Sulfate sind.

**5.** Verfahren nach einem der Ansprüche 1 bis 4, dadurch gekennzeichnet, daß die Konzentration der Anfangslösung der löslichen Salze der Elemente oberhalb von 150 g/l und vorzugsweise von 300 g/l beträgt.

6. Verfahren nach einem der Ansprüche 1 bis 5, dadurch gekennzeichnet, daß die Wasserstoffperoxidmenge im Überschuß zugesetzt wird und daß der Überschuß unter dem fünffachen und vorzugsweise dem zweifachen der Stoichiometrie der Fällungsreaktion liegt.

7. Verfahren nach einem der Ansprüche 1 bis 6, dadurch gekennzeichnet, daß die Kontaktzeit zwischen dem gebildeten Peroxidniederschlag und den Reaktanden, die noch nicht reagiert haben, begrenzt wird.

8. Verfahren nach einem der Ansprüche 1 bis 7, dadurch gekennzeichnet, daß die Fällung in einem Jet-Reaktor durchgeführt wird.

9. Peroxidniederschlag, erhalten nach dem Verfahren eines der Ansprüche 1 bis 8, dadurch gekennzeichnet, daß er von Agglomeraten von Elementarteilchen von mehr oder weniger sphäroidaler Form gebildet wird, deren Verhältnis von Länge zu Durchmesser 2 nicht übersteigt.

10. Verfahren nach Anspruch 9, dadurch gekennzeichnet, daß die Agglomerate in der Dimension zwischen 10 und 15 um liegen.

## Claims

1. Process for obtaining pellets of sintered oxides MxOy, M representing one or more metals or elements used in the constitution of nuclear fuel pellets, said process comprising the successive steps of:

   (a) precipitation treatment of an initial solution of soluble salts of the element or elements M in an acid medium by means of a hydrogen peroxide solution,
   (b) obtaining a precipitate of peroxides in suspension in a mother liquor,
   (c) separating said precipitate from said mother liquors,
   (d) drying, calcining and optionally reducing said precipitate leading to intermediate oxide powders, and
   (e) compressing and sintering said powder,

   wherein the process makes it possible to directly obtain very high density, sintered oxide pellets in which the density generally exceeds 96% of the theoretical density and providing an improved quality, whilst avoiding particular conditioning treatments of said intermediate oxide powders, and is characterized in that in said precipitation treatment (a) there is an instantaneous dispersion of one reagent in the other in a continuous liquid phase contained in an enclosure which is as small as possible, so as to obtain a homogeneous mixture and a precipitation of nuclei, also in instantaneous form, whilst avoiding any enlargement of said nuclei by rapid exhaustion of the mother liquors.

2. Process according to claim 1, characterized in that M represents at least one of the metals or elements used in nuclear fuels and chosen from among fissile or fertiles elements U, Pu, Th and from among neutrophage elements Hf.

3. Process according to claim 2, characterized in that M represents uranium or uranium-based mixtures.

4. Process according to any one of the claims 1 to 3, characterized in that the soluble salts are nitrates or sulphates.

5. Process according to any one of the claims 1 to 4, characterized in that the concentration of the initial solution of the soluble salts in elements exceeds 150 g/l or preferably 300 g/l.

6. Process according to any one of the claims 1 to 5, characterized in that the hydrogen peroxide quantity is added in excess and that said excess is below five times and preferably twice the stoichiometry of the precipitation reactions.

7. Process according to any one of the claims 1 to 6, characterized in that the contact time between the peroxide precipitate formed and the reagents, which have not yet reacted, is limited.

8. Process according to any one of the claims 1 to 7, characterized in that precipitation takes place in a jet reactor.

9. Peroxide precipitate obtained according to the process of any one of the claims 1 to 8, characterized in that it is constituted by agglomerates of elementary particles with a more or less spheroidal shape, whose length: diameter ratio does not exceed 2.

10. Precipitate according to claim 9, characterized in that the agglomerates have a size between 10 and 15 $\mu$m.

FIG. 1 / 2

FIG. 2 / 2